(19) Europäisches Patentamt / European Patent Office / Office européen des brevets

(11) **EP 3 268 698 B1**

(12) **EUROPÄISCHE PATENTSCHRIFT**

(45) Veröffentlichungstag und Bekanntmachung des Hinweises auf die Patenterteilung:
**01.05.2019 Patentblatt 2019/18**

(21) Anmeldenummer: **16704233.2**

(22) Anmeldetag: **15.02.2016**

(51) Int Cl.:
*G01F 1/58* $^{(2006.01)}$

(86) Internationale Anmeldenummer:
**PCT/EP2016/053094**

(87) Internationale Veröffentlichungsnummer:
**WO 2016/142128 (15.09.2016 Gazette 2016/37)**

(54) **MAGNETISCH-INDUKTIVES DURCHFLUSSMESSGERÄT MIT VERRINGERTER STROMAUFNAHME**

MAGNETIC-INDUCTIVE FLOW METER WITH REDUCED CURRENT DRAW

DÉBITMÈTRE MAGNÉTO-INDUCTIF AVEC TIRAGE DE COURANT RÉDUITE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: **11.03.2015 DE 102015103580**

(43) Veröffentlichungstag der Anmeldung:
**17.01.2018 Patentblatt 2018/03**

(73) Patentinhaber: **Endress+Hauser Flowtec AG**
**4153 Reinach (CH)**

(72) Erfinder:
• **FINK, Nikolai**
**4147 Aesch (CH)**

• **SCHMALZRIED, Frank**
**81827 Munchen (DE)**
• **DRAHM, Wolfgang**
**85435 Erding (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
WO-A1-2013/009400        DE-A1- 3 530 055
DE-A1-102007 011 394     DE-A1-102011 008 295
US-A- 3 142 796          US-A- 3 759 247

**Beschreibung**

Die Erfindung betrifft ein magnetisch-induktives Durchflussmessgerät zur Messung des Durchflusses eines fließfähigen Mediums sowie ein Verfahren zur Bestimmung eines Durchflusses in einem Messrohr.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Eine Vielzahl solcher Feldgeräte wird von der Firma Endress+Hauser hergestellt und vertrieben.

Insbesondere für die Messung des Durchflusses durch ein Messrohr werden eine Vielzahl von unterschiedlichen Messprinzipien angewendet. Ein wichtiges Messprinzip ist die magnetisch-induktive Durchflussmessung. Magnetisch-induktive Durchflussmessgeräte nutzen für die volumetrische Strömungsmessung das Prinzip der elektrodynamischen Induktion aus. Senkrecht zu einem Magnetfeld bewegte Ladungsträger des Mediums induzieren eine Messspannung in im Wesentlichen senkrecht zur Durchflussrichtung des Mediums und senkrecht zur Richtung des Magnetfeldes angeordneten Messelektroden. Die in die Messelektroden induzierte Messspannung ist proportional zu der über den Querschnitt des Messrohres gemittelten Strömungsgeschwindigkeit des Mediums, also proportional zum Volumenstrom.

Für die Durchführung der Messung wird in der Regel ein magnetisches Wechselfeld eingesetzt, dass mittels eines Spulensystems erzeugt wird. Der Stromverbrauch des magnetisch-induktiven Durchflussmessgeräts wird dabei massgeblich durch die Stromaufnahme der Spulen für die Erzeugung des magnetischen Wechselfeldes verursacht.

DE 35 30 055 A1 beschreibt ein magnetisch-induktives Durchflussmessgerät mit einem Permanentmagneten, durch den ein permanentes Magnetfeld erzeugt wird und einem Paar von Spulen, durch welche ein magnetisches Wechselfeld erzeugt wird.

Es ist Aufgabe der Erfindung, ein magnetisch-induktives Durchflussmessgerät zur Verfügung zu stellen, welches einen verringerten Stromverbrauch aufweist.

Gelöst wird diese Aufgabe durch die in den Ansprüchen 1 und 17 angegebenen Merkmale.

Vorteilhafte Weiterentwicklungen der Erfindung sind in den Unteransprüchen angegeben.

Ein magnetisch-induktives Durchflussmessgerät entsprechend den Ausführungsformen der Erfindung dient zur Messung des Durchflusses eines fließfähigen Mediums. Das Durchflussmessgerät umfasst ein Messrohr, ein Paar von Spulen, die einander gegenüberliegend am Messrohr angeordnet sind und dazu ausgelegt sind, ein ein- und ausschaltbares magnetisches Wechselfeld zu erzeugen, das im Wesentlichen quer zur Längsachse des Messrohrs orientiert ist, sowie ein Paar von Permanentmagneten, die einander gegenüberliegend am Messrohr angeordnet sind und dazu ausgelegt sind, ein permanentes Magnetfeld zu erzeugen, das im Wesentlichen quer zur Längsachse des Messrohrs orientiert ist. Darüber hinaus umfasst das Durchflussmessgerät ein oder mehrere Paare von einander am Messrohr gegenüberliegend angeordneten Messelektroden, von denen ein Paar von Messelektroden dazu ausgelegt ist, bei ausgeschaltetem magnetischen Wechselfeld eine durch das permanente Magnetfeld induzierte Messspannung abzugreifen, und eine Auswerteeinheit, die dazu ausgelegt ist, bei ausgeschaltetem magnetischen Wechselfeld die durch das permanente Magnetfeld induzierte Messspannung zu überwachen, bei einer vordefinierten Änderung der Messspannung das magnetische Wechselfeld einzuschalten und mittels des magnetischen Wechselfeldes einen Messwert für den Durchfluss zu bestimmen.

Das Durchflussmessgerät gemäß den Ausführungsformen der vorliegenden Erfindung weist ein Paar von Permanentmagneten auf, die einander gegenüberliegend am Messrohr angeordnet sind. Diese Permanentmagnete sind dazu ausgelegt, über den Rohrquerschnitt des Messrohrs hinweg ein permanentes Magnetfeld zu erzeugen. Wenn das Medium mit einer gewissen Fließgeschwindigkeit durch das Messrohr strömt, wird auch bei ausgeschaltetem magnetischem Wechselfeld durch dieses permanente Magnetfeld in Richtung senkrecht zum Magnetfeld eine Messspannung induziert. Diese induzierte Messspannung hängt von der Strömungsgeschwindigkeit des Mediums ab, so dass sich anhand der vom Permanentmagnetfeld induzierten Messspannung der Verlauf des Durchflusses verfolgen lässt. Auch bei ausgeschaltetem magnetischem Wechselfeld ist es so möglich, Durchflussänderungen zu erkennen.

Wenn auf diese Weise eine Durchflussänderung erkannt wird, kann zur Durchführung einer genauen Durchflussmessung das magnetische Wechselfeld für eine gewisse Zeitspanne eingeschaltet werden. Mit Hilfe des magnetischen Wechselfelds wird dann eine genaue Durchflussmessung durchgeführt. Das magnetische Wechselfeld wird nur jeweils dann eingeschaltet, wenn infolge einer Durchflussänderung ein neuer Messwert für den Durchfluss benötigt wird. Ansonsten bleibt das magnetische Wechselfeld ausgeschaltet.

Das magnetische Wechselfeld ist also nicht ständig eingeschaltet, sondern wird nur von Zeit zu Zeit eingeschaltet. Solange das magnetische Wechselfeld ausgeschaltet ist, wird nur sehr wenig Strom verbraucht. Im zeitlichen Mittel wird dadurch die Stromaufnahme des Durchflussmessgeräts deutlich verringert, das Durchflussmessgerät nimmt im zeitlichen Mittel deutlich weniger Leistung auf. Dennoch kann eine hinreichend genaue Überwachung des Durchflusses gewährleistet werden.

Nachfolgend ist die Erfindung anhand von in der Zeichnung dargestellten Ausführungsbeispielen näher erläutert. Es zeigen:

Fig. 1A ein magnetisch-induktives Durchflussmessgerät, bei dem innerhalb der Spulen Permanentmagnete angeordnet sind;

Fig. 1B ein magnetisch-induktives Durchflussmessgerät, bei dem die Permanentmagnete oberhalb bzw. unterhalb der Spulenkerne angebracht sind;

Fig. 1C eine weitere Möglichkeit zur Realisierung des Spulensystems eines magnetisch-induktiven Durchflussmessgeräts;

Fig. 2A ein erstes Messschema zur Bestimmung des Durchflusses im Messrohr;

Fig. 2B ein zweites Messschema zur Bestimmung des Durchflusses im Messrohr;

Fig. 3A eine analoge Auswerteeinheit zur Auswertung der Messspannung;

Fig. 3B eine Auswerteeinheit mit digitaler Signalverarbeitung zur Auswertung der Messspannung;

Fig. 4A den Strom durch die Spulen als Funktion der Zeit;

Fig. 4B die vom magnetischen Wechselfeld induzierte Messspannung $U_E$ als Funktion der Zeit;

Fig. 5A eine weitere geometrische Anordnung der Spulen und Permanentmagnete des magnetisch-induktiven Durchflussmessgeräts;

Fig. 5B eine spezielle geometrische Anordnung, bei der die Permanentmagnete senkrecht zu den Spulen orientiert sind; und

Fig. 6 eine weitere geometrische Anordnung, bei der die Spulen und die Permanentmagnete in voneinander beabstandeten Querschnittsebenen des Messrohrs angeordnet sind.

Magnetisch-induktive Durchflussmessgeräte nutzen für die volumetrische Strömungsmessung das Prinzip der elektrodynamischen Induktion aus und sind aus einer Vielzahl von Veröffentlichungen bekannt. Senkrecht zu einem Magnetfeld bewegte Ladungsträger des Mediums induzieren eine Messspannung in im Wesentlichen senkrecht zur Durchflussrichtung des Mediums und senkrecht zur Richtung des Magnetfeldes angeordneten Messelektroden. Die in die Messelektroden induzierte Messspannung ist proportional zu der über den Querschnitt des Messrohres gemittelten Strömungsgeschwindigkeit des Mediums, also proportional zum Volumenstrom. Ist die Dichte des Mediums bekannt, lässt sich der Massestrom in der Rohrleitung bzw. in dem Messrohr bestimmen. Die Messspannung wird üblicherweise über ein Messelektrodenpaar abgegriffen, das bezüglich der Koordinate entlang der Messrohrachse in dem Bereich maximaler Magnetfeldstärke angeordnet ist und wo folglich die maximale Messspannung zu erwarten ist. Die Elektroden sind üblicherweise galvanisch mit dem Medium gekoppelt; es sind jedoch auch magnetisch-induktive Durchflussmessgeräte mit berührungslos kapazitiv koppelnden Elektroden bekannt.

Das Messrohr kann dabei entweder aus einem elektrisch leitfähigen, nichtmagnetischen Material, z.B. Edelstahl, gefertigt sein, oder aus einem elektrisch isolierenden Material bestehen. Ist das Messrohr aus einem elektrisch leitfähigen Material gefertigt, so muss es in dem mit dem Medium in Kontakt kommenden Bereich mit einem Liner aus einem elektrisch isolierenden Material ausgekleidet sein. Der Liner besteht je nach Temperatur und Medium beispielsweise aus einem thermoplastischen, einem duroplastischen oder einem elastomeren Kunststoff. Es sind jedoch auch magnetisch-induktive Durchflussmessgeräte mit einer keramischen Auskleidung bekannt.

Eine Elektrode lässt sich im Wesentlichen in einen Elektrodenkopf, der zumindest teilweise mit einem Medium, welches das Messrohr durchströmt, in Kontakt kommt, und einen Elektrodenschaft, der fast vollständig in der Wandung des Messrohrs eingebracht ist, unterteilen.

Die Elektroden sind neben dem Magnetsystem die zentralen Komponenten eines magnetisch-induktiven Durchflussmessgerätes. Bei der Ausgestaltung und Anordnung der Elektroden ist darauf zu achten, dass sie sich möglichst einfach in dem Messrohr montieren lassen und dass nachfolgend im Messbetrieb keine Dichtigkeitsprobleme auftreten; darüber hinaus sollen sich die Elektroden durch eine empfindliche und gleichzeitig störungsarme Messsignalerfassung auszeichnen.

Neben den Messelektroden, die zum Abgriff eines Messsignals dienen, werden oftmals zusätzliche Elektroden in Form von Bezugs- oder Erdungselektroden in das Messrohr eingebaut, die dazu dienen, ein elektrisches Referenzpotential zu messen oder teilgefüllte Messrohre zu erkennen oder die Mediumstemperatur mittels eingebautem Temperaturfühler zu erfassen.

In der Regel umfasst das Magnetsystem eines magnetisch-induktiven Durchflussmessgeräts ein Spulenpaar, das dazu ausgelegt ist, ein magnetisches Wechselfeld zu erzeugen, das sich über den gesamten Querschnitt des Messrohrs hinweg erstreckt. Zur Erzeugung des magnetischen Wechselfeldes werden die Spulen durch einen getakteten Gleichstrom gespeist, der beispielsweise mit einer Frequenz von 8 Hz bzw. 16 Hz die Richtung wechselt.

Der ständige Stromfluss durch das Spulenpaar des Magnetsystems führt zu einer dementsprechend hohen Leistungsaufnahme von magnetisch-induktiven Durchflussmessgeräten. Dabei hängt die Leistungsaufnahme insbesondere vom Rohrquerschnitt ab, wobei bei höheren Rohrquerschnitten eine höhere Leistung zur Erzeugung des magnetischen Wechselfelds erforderlich ist als bei kleineren Rohrquerschnitten. Generell besteht bei magnetisch-induktiven Durchflussmessgeräten das Bedürfnis, die Stromaufnahme zu verringern. Insbesondere bei Zwei-Leiter-Feldgeräten und bei batteriebetriebenen Feldgeräten wäre eine Verringerung der Stromaufnahme von Interesse.

Bei Zwei-Leiter-Feldgeräten erfolgt sowohl die Speisung als auch die Messwertübertragung über ein Paar von Anschlussleitungen. Da bei vielen Zwei-Leiter-Feldgeräten die Messwerte in Form eines Stromwerts übertragen werden, muss das Feldgerät häufig über längere Zeiträume hinweg mit einem vergleichsweise niedrigen Strom auskommen.

Bei batteriebetriebenen Feldgeräten erfolgt die Speisung des Feldgeräts über eine interne Batterie. Batteriebetriebene Feldgeräte werden häufig an schlecht zugänglichen Stellen eingesetzt und sind in der Regel nicht an einen Feldbus angeschlossen. Um eine längere Batterielebensdauer zu ermöglichen, wäre auch hier eine Verringerung der Leistungsaufnahme des Durchflussmessgeräts wünschenswert.

Zur Verringerung der Stromaufnahme von magnetisch-induktiven Durchflussmessgeräten wird vorgeschlagen, zur Überwachung des Durchflusses ein von Permanentmagneten erzeugtes permanentes Magnetfeld zu nutzen, dessen Erzeugung keinen Strom verbraucht, und das für die eigentliche Stromaufnahme verantwortliche Spulensystem des Durchflussmessgeräts nur von Zeit zu Zeit einzuschalten.

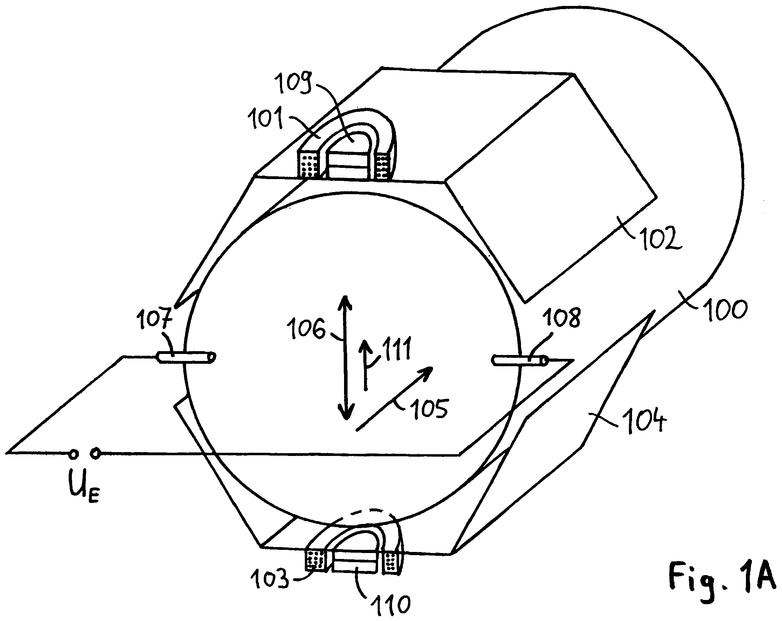

In Fig. 1A ist ein magnetisch-induktives Durchflussmessgerät gezeigt, das nach diesem Prinzip arbeitet. Zur Erzeugung des für die Durchflussmessung benötigten magnetischen Wechselfelds ist ein Spulensystem vorgesehen. Das Spulensystem umfasst eine oberhalb des Messrohrs 100 angeordnete erste Spule 101 und einen ersten Polschuh 102 sowie eine unterhalb des Messrohrs 100 angeordnete zweite Spule 103 und einen zweiten Polschuh 104. Die beiden Spulen 101, 103 sind dazu ausgelegt, ein senkrecht zur Fließrichtung 105 des Mediums orientiertes magnetisches Wechselfeld zu erzeugen. Die Polschuhe 102, 104 sind so ausgebildet, dass sich das von den Spulen 101, 103 erzeugte Magnetfeld gemäß einer gewünschten mathematischen Funktion einstellt, die ein möglichst lineares Messverhalten bei verschiedenen Strömungsprofilen garantiert.

Die Richtung des von den Spulen 101, 103 erzeugten magnetischen Wechselfelds ist in Fig. 1A durch den Doppelpfeil 106 veranschaulicht. Durch die Bewegung der Ladungsträger des Mediums wird senkrecht zu dem Magnetfeld eine Messspannung $U_E$ induziert, die über die beiden Messelektroden 107, 108 abgegriffen werden kann. Dazu sind die beiden Messelektroden 107, 108 im Wesentlichen senkrecht zur Fließrichtung 105 des Mediums und senkrecht zur Richtung des magnetischen Wechselfelds angeordnet. Die an den Messelektroden 107, 108 abgegriffene Messspannung $U_E$ ist direkt proportional zur Fließgeschwindigkeit v des Mediums. Je schneller das Medium im Messrohr 100 fließt, desto höher wird die an den Messelektroden 107, 108 abgreifbare Spannung $U_E$.

Bei dem in Fig. 1A gezeigten Durchflussmessgerät sind zusätzlich zu den Spulen 101, 103 zwei Permanentmagnete 109, 110 oberhalb und unterhalb des Messrohrs 100 angeordnet. Der erste Permanentmagnet 109 ist im Inneren der Spule 101 oberhalb des Messrohrs 100 angeordnet, und der zweite Permanentmagnet 110 ist im Inneren der Spule 103 unterhalb des Messrohrs 100 angeordnet. Durch die beiden Permanentmagnete 109, 110 wird über den Querschnitt des Messrohrs 100 hinweg ein permanentes Magnetfeld erzeugt, das in Richtung des Pfeils 111 ausgerichtet ist. Auch wenn die beiden Spulen 101, 103 ausgeschaltet sind und kein magnetisches Wechselfeld erzeugen, wird von den beiden Permanentmagneten 109, 110 ein permanentes Magnetfeld erzeugt. Durch dieses permanente Magnetfeld wird auch bei ausgeschaltetem magnetischen Wechselfeld in dem fließenden Medium eine Messspannung $U_E$ induziert, die an den Messelektroden 107, 108 abgegriffen werden kann. Die Messspannung $U_E$ hängt dabei von der Fließgeschwindigkeit des Mediums ab.

Die durch das permanente Magnetfeld induzierte Messspannung $U_E$ ist von elektrochemischen Potentialeinflüssen beeinflusst und eignet sich daher nur bedingt für eine genaue Bestimmung des absoluten Durchflusswerts. Allerdings ist die von den beiden Permanentmagneten 109, 110 induzierte Messspannung $U_E$ sehr wohl dazu geeignet, den zeitlichen Verlauf des Durchflusses zu überwachen und signifikante Änderungen des Durchflusses zu erkennen. Wenn eine derartige signifikante Änderung des Durchflusses erkannt wird, wird das von den Spulen 101 und 103 erzeugte magnetische Wechselfeld für eine bestimmte Zeitspanne eingeschaltet, um eine genaue Messung des veränderten Durchflusses durchzuführen.

Anders als bei den Lösungen des Stands der Technik sind die Spulen 101, 103 also nicht ständig eingeschaltet, sondern werden nur von Zeit zu Zeit aktiviert, beispielsweise dann, wenn infolge einer Durchflussänderung eine Neubestimmung des Durchflusses erforderlich ist. Die Spulen 101, 103 werden also nur während gewisser Zeitspannen eingeschaltet. Dadurch kann die mittlere Leistungsaufnahme des magnetisch-induktiven Durchflussmessgeräts deutlich abgesenkt werden. Auf diese Weise lassen sich magnetisch-induktive Durchflussmessgeräte bauen, die einen deutlich verminderten Strombedarf aufweisen.

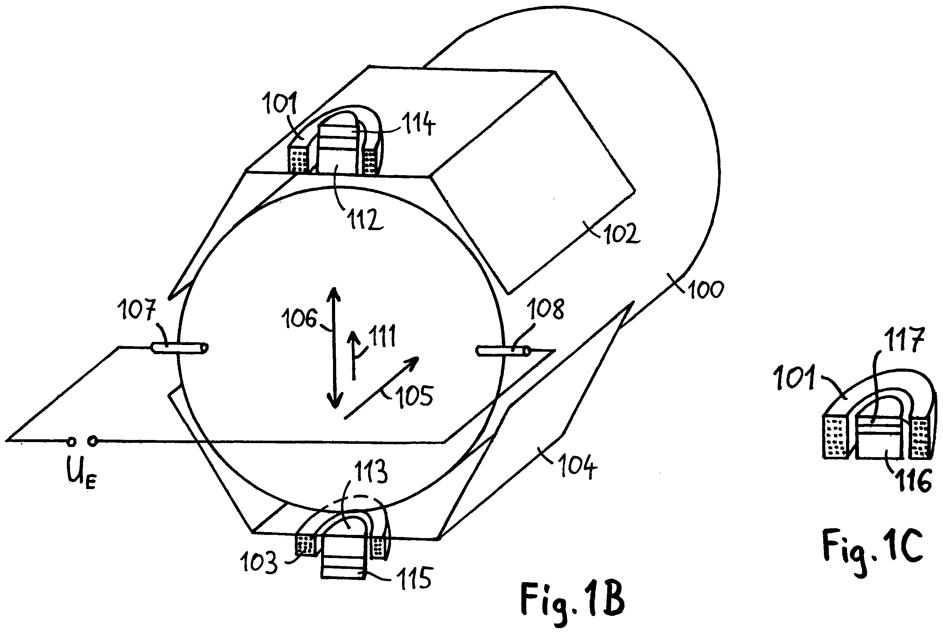

Fig. 1B zeigt ein weiteres magnetisch-induktives Durchflussmessgerät, wobei sich das Spulensystem des in Fig. 1B gezeigten Durchflussmessgeräts von dem in Fig. 1A gezeigten Spulensystem unterscheidet. In Fig. 1B sind Merkmale, die gleich oder ähnlich zu den bereits in Fig. 1A gezeigten Merkmalen sind, mit denselben Bezugszeichen wie in Fig. 1A versehen, so dass nachfolgend nur auf die Unterschiede eingegangen und im Übrigen auf die Beschreibung von Fig. 1A Bezug genommen wird.

Im Unterschied zu Fig. 1A sind innerhalb der Spulen 101, 103 jeweils Spulenkerne 112, 113 angeordnet. Durch diese im Inneren der Spulen 101, 103 angeordneten Spulenkerne 112, 113 wird das magnetische Wechselfeld verstärkt und zu den Polschuhen 102, 104 geführt. Der erste Permanentmagnet 114 ist oberhalb des Spulenkerns 112 angeordnet und schließt sich an den Spulenkern 112 an. Der zweite Permanentmagnet 115 ist unterhalb des Spulenkerns 113 angeordnet und schließt sich an den Spulenkern 113 an. Obwohl die Permanentmagnete 114, 115 jeweils auf den vom Messrohr 100 abgewandten Seiten der Spulenkerne 112, 113 angeordnet sind, ist das von ihnen erzeugte permanente Magnetfeld stark genug, um das Innere des Messrohrs 100 mit einem gleichmäßigen permanenten Magnetfeld zu durchsetzen.

In Fig. 1C ist eine weitere Möglichkeit zur Ausgestaltung des Spulensystems gezeigt, wobei hier nur die erste Spule 101 gezeigt ist. Im Inneren der ersten Spule 101 ist ein Spulenkern 116 angeordnet, der das Innere der Spule jedoch nur teilweise ausfüllt. Der Rest des Spuleninneren wird durch einen Permanentmagnet 117 ausgefüllt, der sich an den Spulenkern 116 anschließt und den Spulenkern 116 teilweise ersetzt. Bei der in Fig. 1C gezeigten Lösung schließt der Permanentmagnet 117 bündig mit der ersten Spule 101 ab. Alternativ dazu könnte der Permanentmagnet 117 auch aus der ersten Spule 101 oben herausragen.

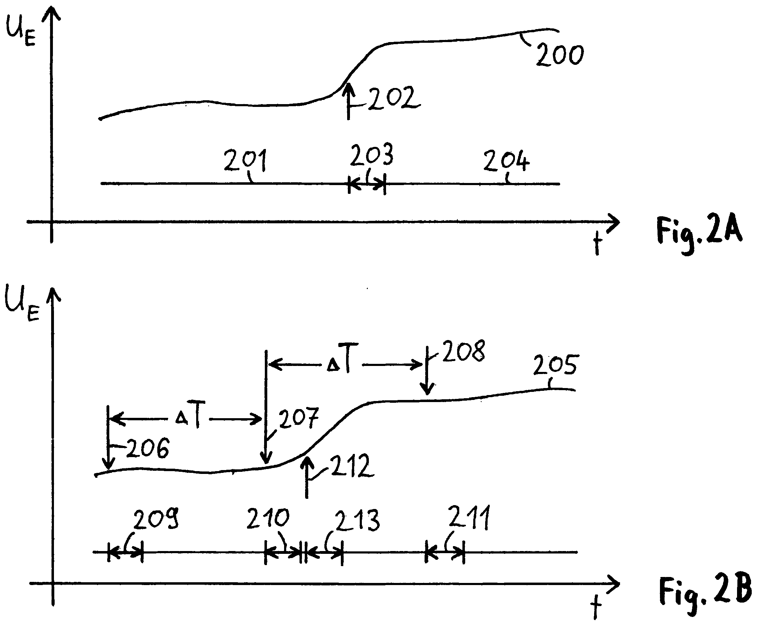

In Fig. 2A ist der Ablauf des Messprinzips veranschaulicht. Entlang der Hochachse ist die durch das permanente Magnetfeld verursache Messspannung $U_E$ aufgetragen, die bei ausgeschaltetem magnetischen Wechselfeld an den Messelektroden 105, 106 abgegriffen werden kann. Entlang der Rechtsachse ist die Zeit t aufgetragen. Die Kurve 200 zeigt den zeitlichen Verlauf der an den Messelektroden 105, 106 abgreifbaren Messspannung $U_E$. Während des Zeitintervalls 201 ändert sich die Messspannung $U_E$ nur geringfügig, deshalb wird hier keine genaue Messung veranlasst. Erst zum Zeitpunkt 202 wird ein signifikanter Anstieg der Messspannung $U_E$ detektiert. Dementsprechend wird während der darauf folgenden Zeitspanne 203 das magnetische Wechselfeld eingeschaltet, und es wird ein genauer Messwert für den Durchfluss bestimmt. Während des sich anschließenden Zeitintervalls 204 sind die Änderungen der abgegriffenen Messspannung $U_E$ dann wieder relativ gering. Daher wird während des Zeitintervalls 204 keine genaue Messung des Durchflusswerts veranlasst.

Bei dem anhand von Fig. 2A beschriebenen Messschema wird jeweils dann eine genaue Messung des Durchflusses veranlasst, wenn eine signifikante Änderung der abgegriffenen Messspannung $U_E$ detektiert wird, also beispielsweise zum Zeitpunkt 202. Zusätzlich zu diesen Messungen, die jeweils bei signifikanten Veränderungen des Durchflusses angestoßen werden, können darüber hinaus auch in regelmäßigen Zeitabständen $\Delta T$ genaue Messungen des Durchflusses durchgeführt werden.

Ein derartiges Messschema ist in Fig. 2B dargestellt. Die Kurve 205 zeigt den Verlauf der Messspannung $U_E$ als Funktion der Zeit. In regelmäßigen Zeitintervallen $\Delta T$ wird eine genaue Bestimmung des Durchflusses durchgeführt, also zu den Zeitpunkten 206, 207, 208. Zur Durchführung der genauen Messungen wird während der Zeitintervalle 209, 210, 211 jeweils das magnetische Wechselfeld eingeschaltet. Darüber hinaus wird zum Zeitpunkt 212 ein signifikanter Anstieg der Messspannung $U_E$ detektiert, und daher wird während des darauf folgenden Zeitintervalls 213 das magnetische Wechselfeld ebenfalls eingeschaltet. Insgesamt wird das magnetische Wechselfeld also nur während der Zeitintervalle 209, 210, 211, 213 eingeschaltet. Während der restlichen Zeit bleibt das magnetische Wechselfeld ausgeschaltet, was zu einer erheblichen Absenkung des durchschnittlichen Stromverbrauchs führt. Dadurch lassen sich magnetisch-induktive Durchflussmessgeräte bauen, die einen deutlich verminderten Strombedarf aufweisen. Dies ist insbesondere für Zwei-Leiter-Feldgeräte und batteriebetriebene Feldgeräte von Vorteil.

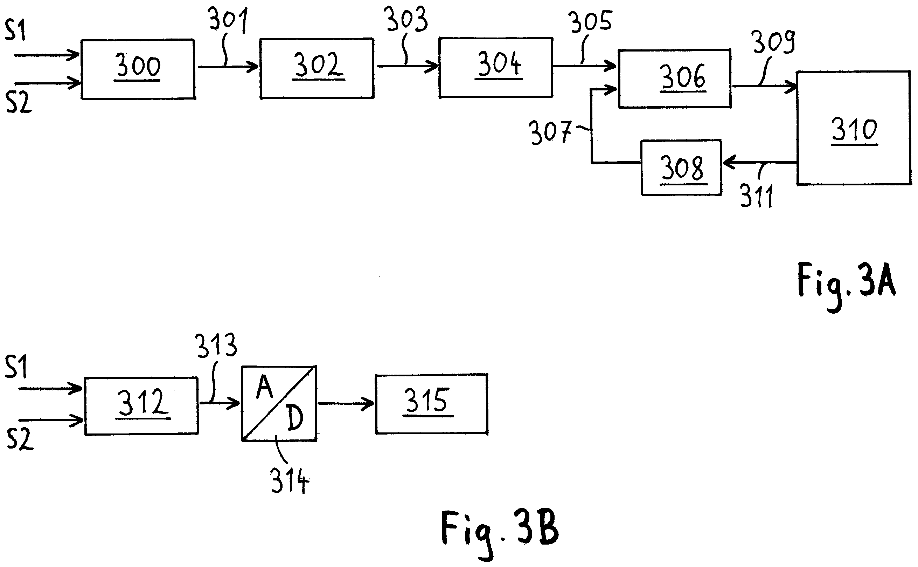

In Fig. 3A ist eine Auswerteschaltung zur Überwachung der vom permanenten Magnetfeld induzierten Messspannung gezeigt. Die an den beiden Messelektroden 107, 108 abgreifbaren Signalspannungen S1 und S2 werden einem Differenzverstärker 300 zugeführt, der die beiden Signalspannungen S1 und S2 voneinander subtrahiert. Das so erhaltene Differenzsignal 301 wird durch ein Filter 302 gefiltert. Das Filter 302 dient in erster Linie zum Ausfiltern von Störsignalen. Das gefilterte Signal 303 wird einem Differenzierer 304 zugeführt, der die Ableitung des gefilterten Signals 303 bildet. Anhand der Ableitung lässt sich erkennen, wie stark sich das gefilterte Signal 303 pro Zeiteinheit ändert. Das abgeleitete Signal 305 wird einem Komparator 306 zugeführt. Der Komparator 306 vergleicht das abgeleitete Signal 305 mit einem Grenzwert 307, der von einer Referenzwerteinheit 308 zur Verfügung gestellt wird. Solange das abgeleitete Signal 305 unterhalb des Grenzwerts 307 liegt, wird keine neue Durchflussmessung veranlasst, und das magnetisch-induktive Messsystem 310 bleibt ausgeschaltet. Sobald jedoch das abgeleitete Signal 305 den Grenzwert 307 überschreitet, erzeugt der Komparator 306 ein Einschaltsignal 309 (sog. "Wake-Up Signal"), das das magnetisch-induktive Messsystem 310 zur Erzeugung des magnetischen Wechselfelds einschaltet und eine neue Durchflussmessung unter Verwendung des magnetischen Wechselfelds veranlasst.

Der Grenzwert 307 wird von der Referenzwerteinheit 308 zur Verfügung gestellt. Dabei ist es von Vorteil, wenn der von der Referenzwerteinheit 308 erzeugte Grenzwert 307 in Abhängigkeit von der erforderlichen Genauigkeit der Durchflussmessung dynamisch angepasst wird. Durch Anpassen des Grenzwerts kann festgelegt werden, wie häufig eine Neubestimmung des Durchflusswerts durchgeführt wird. Wenn ein vergleichsweise hoher Grenzwert festgesetzt wird, wird nur bei relativ starken Änderungen des Durchflusses eine genaue Messung des Durchflusses veranlasst, die Messungen erfolgen dann also relativ selten. Wenn der Grenzwert dagegen relativ niedrig gewählt wird, dann wird der Grenzwert häufig überschritten, und dementsprechend häufig wird eine genaue Messung des Durchflusswerts veranlasst. Durch Einstellen des Grenzwerts kann dynamisch festgelegt werden, mit welcher Genauigkeit der Durchfluss verfolgt wird.

Dabei kann vorgesehen sein, dass der Grenzwert 307 der Referenzwerteinheit 308 von dem magnetisch-induktiven Messsystem 310 aus mit Hilfe eines Stellsignals 311 eingestellt wird. Wenn die Durchflussmessungen zu häufig erfolgen, wird der Grenzwert 307 durch das magnetisch-induktive Messsystem 310 heraufgesetzt. Wenn die Durchflussmessungen zu selten erfolgen, wird der Grenzwert 307 herabgesetzt.

In Fig. 3B ist eine weitere Auswerteeinheit gezeigt, bei der die vom permanenten Magnetfeld induzierte Messspannung mittels digitaler Signalverarbeitung ausgewertet wird. Die an den beiden Messelektroden 107, 108 abgreifbaren Signalspannungen S1 und S2 werden einem Differenzverstärker 312 zugeführt, der die beiden Signalspannungen S1 und S2 voneinander subtrahiert. Das so erhaltene Differenzsignal 313 wird dann einem Analog-/Digital-Wandler 314 zugeführt, der das Analogsignal in eine Folge von digitalen Abtastwerten umwandelt. Diese digitalen Abtastwerte werden dann einem Mikroprozessor 315 (oder einem digitalen Signalprozessor) zugeführt, welcher ermittelt, wie stark sich die Messspannung $U_E$ pro Zeiteinheit ändert. Wenn die Spannungsänderung $\Delta U_E$ pro Zeiteinheit $\Delta t$ beispielsweise einen vorgegebenen Grenzwert überschreitet, wird eine genaue Messung des Durchflusses veranlasst.

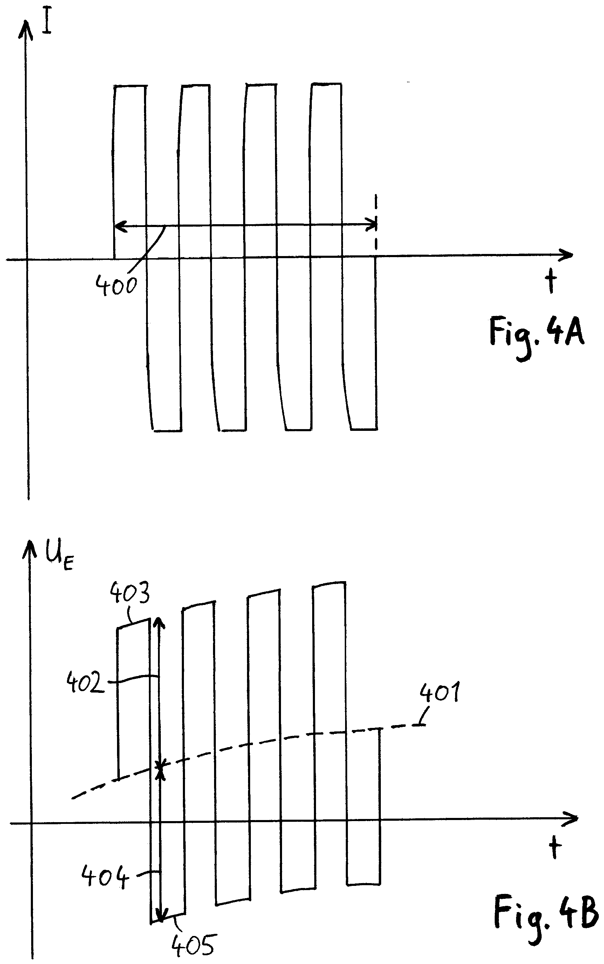

In Fig. 4A und Fig. 4B ist gezeigt, wie eine genaue Messung des Durchflusses mit Hilfe des von den Spulen 101, 103 erzeugten magnetischen Wechselfeldes durchgeführt wird. Derartige Durchflussmessungen werden während des Zeitintervalls 203 in Fig. 2A und während der Zeitintervalle 209, 210, 211, 213 in Fig. 2B durchgeführt. Zur Erzeugung des magnetischen Wechselfelds werden die beiden Spulen 101, 103 mit einem getakteten Gleichstrom gespeist, der in Fig. 4A als Funktion der Zeit aufgetragen ist. Entlang der Hochachse ist der Strom I durch die beiden Spulen 101, 103 aufgetragen, und entlang der Rechtsachse ist die Zeit t aufgetragen. Es ist zu erkennen, dass der getaktete Gleichstrom mit einer vorgegebenen Frequenz (beispielsweise 8 Hz bzw. 16 Hz) seine Polarität wechselt. Infolge dieses alternierenden Stromflusses durch die Spulen 101, 103 wird von den Spulen 101, 103 ein magnetisches Wechselfeld erzeugt, dessen Richtung entsprechend der Richtung des in Fig. 4A gezeigten Stromflusses ständig wechselt. Während des in Fig. 4A eingezeichneten Messintervalls 400 wechselt das Magnetfeld beispielsweise insgesamt achtmal die Richtung.

Durch das magnetische Wechselfeld wird infolge der Bewegung der Ladungsträger des fließenden Mediums eine Messspannung $U_E$ in Richtung quer zum Messrohr 100 induziert, die an den beiden Messelektroden 107, 108 abgegriffen werden kann. Diese Messspannung $U_E$ ist in Fig. 4B als Funktion der Zeit aufgetragen. Anhand von Fig. 4B ist zu erkennen, dass sich die Messspannung $U_E$ im Takt des alternierenden Magnetfelds ändert. Solang das Magnetfeld in eine erste Richtung orientiert ist, also beispielsweise von unten nach oben, wird dem gestrichelt eingezeichneten Spannungsoffset 401 eine Induktionsspannung 402 von positiven Vorzeichen überlagert, und man erhält einen ersten Messspannungswert 403. Sobald das Magnetfeld die Richtung wechselt und jetzt in umgekehrter Richtung orientiert ist, beispielsweise von oben nach unten, wird dem Spannungsoffset 401 eine Induktionsspannung 404 von negativen Vorzeichen überlagert, und man erhält einen zweiten Messspannungswert 405. Indem man nun die Differenz des ersten Messspannungswert 403 und des zweiten Messspannungswerts 405 ermittelt, erhält man eine Differenzspannung $\Delta U_E$, die nicht mehr vom Spannungsoffset 401 abhängig ist. Diese Differenzspannung $\Delta U_E$ hängt nur mehr vom Betrag B des magnetischen Wechselfelds ab:

$$\Delta U_E = k \cdot B \cdot D \cdot v \, ,$$

wobei k eine Proportionalitätskonstante, D den Durchmesser des Messrohrs, v die Strömungsgeschwindigkeit des Mediums und B den Betrag des magnetischen Wechselfelds bezeichnet.

Durch den Einsatz des magnetischen Wechselfeldes lässt sich also der Einfluss des Spannungsoffsets 401 eliminieren. Der Spannungsoffset 401 hängt maßgeblich vom elektrochemischen Potential der beiden Messelektroden 107, 108 ab, welches sich im Laufe der Zeit ändern kann und einer permanenten Drift unterworfen ist. Darüber hinaus trägt zum Spannungsoffset 401 auch der induzierte Spannungsbeitrag bei, der von dem durch die beiden Permanentmagneten 109, 110 erzeugten permanenten Magnetfeld hervorgerufen wird. Insofern stört die von den beiden Permanentmagneten 109, 110 erzeugte Magnetfeldkomponente nicht bei der genauen Bestimmung der Strömungsgeschwindigkeit v und des Durchflusses, weil dieses permanente Magnetfeld lediglich zum Spannungsoffset 401 beiträgt, der ohnehin durch die Differenzbildung eliminiert wird. Insofern kann durch die Messung mit wechselndem Magnetfeld eine genaue Bestimmung der Strömungsgeschwindigkeit v vorgenommen werden. Auf diese Weise kann der Durchfluss mit hoher Genauigkeit bestimmt werden.

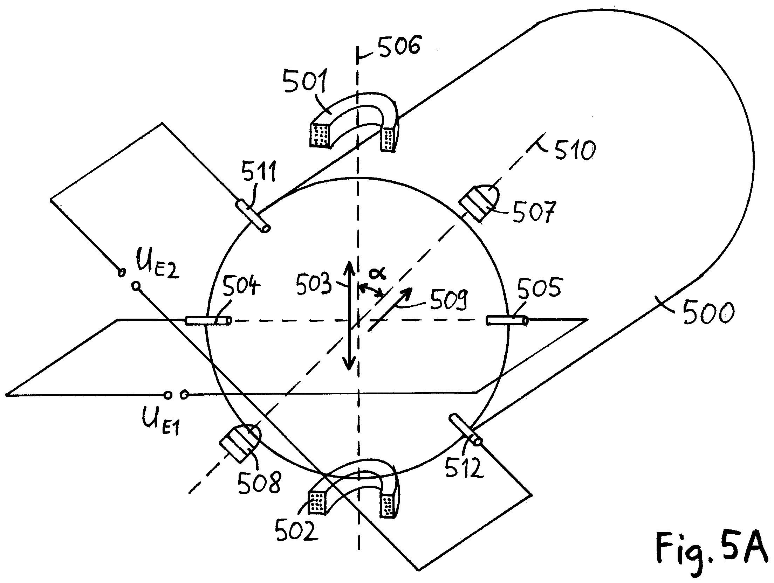

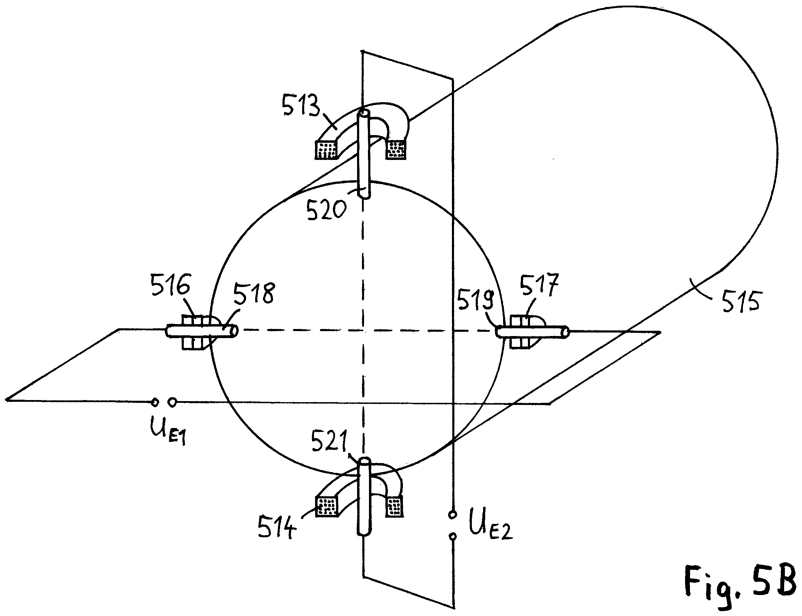

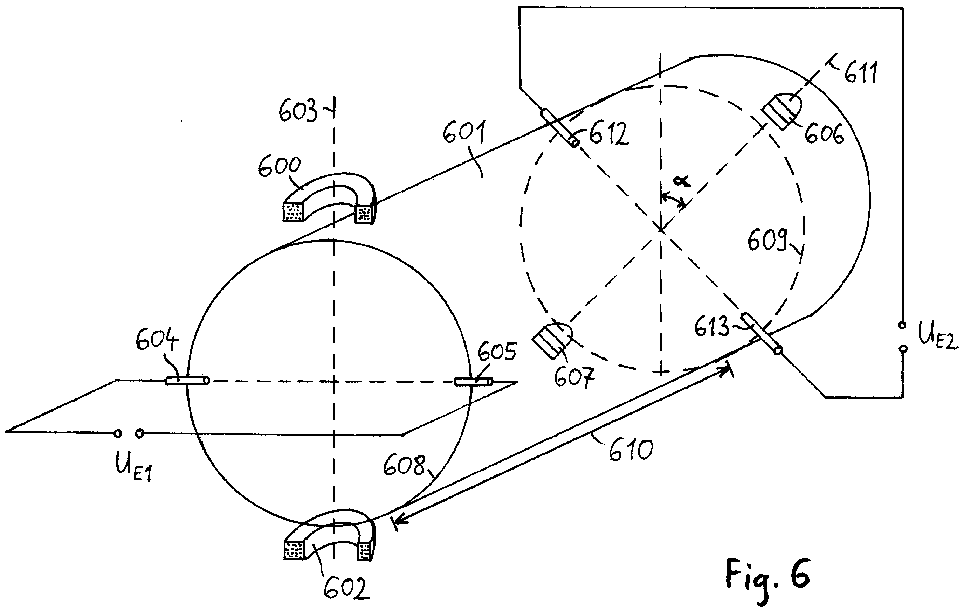

Bei dem in Fig. 1 gezeigten Durchflussmessgerät sind die Spulen 101, 103 und die Permanentmagnete 109, 110 entlang derselben Achse ausgerichtet. Hier sind jedoch auch andere geometrische Anordnungen möglich. In Fig. 5A, Fig. 5B und Fig. 6 sind jeweils alternative Anordnungsmöglichkeiten für die Spulen und die Permanentmagnete gezeigt.

In Fig. 5A ist oberhalb des Messrohrs 500 eine erste Spule 501 angeordnet, und unterhalb des Messrohrs 500 ist eine zweite Spule 502 angeordnet. Das von den beiden Spulen 501, 502 erzeugte magnetische Wechselfeld ist durch den Doppelpfeil 503 veranschaulicht. Die beiden Messelektroden 504, 505 sind senkrecht zur Strömungsrichtung des Mediums und senkrecht zu der von den Spulen 501, 502 festgelegten Achse 506 angeordnet. Bei eingeschaltetem magnetischem Wechselfeld kann an den beiden Messelektroden 504, 505 eine Messspannung $U_{E1}$ abgegriffen werden, welche eine genaue Bestimmung des aktuellen Durchflusswerts ermöglicht.

Zusätzlich sind am Messrohr 500 an einander gegenüberliegenden Positionen die beiden Permanentmagnete 507, 508 angeordnet, die über den Querschnitt des Messrohrs 500 hinweg ein permanentes Magnetfeld erzeugen, dessen Richtung durch den Pfeil 509 veranschaulicht ist. Die von den beiden Permanentmagneten 507, 508 festgelegte Achse 510 ist gegenüber der durch die Spulen 501, 502 festgelegten Achse 506 um einen Winkel $\alpha$ verdreht ausgerichtet. Der Winkel $\alpha$ sollte nicht zu klein gewählt werden, weil die unterhalb der Spulen 501, 502 angeordneten Polschuhe einen gewissen Platz beanspruchen. Beispielsweise könnte der Winkel $\alpha$ gleich 45° gewählt werden.

Im Unterschied zu der in Fig. 1 gezeigten Lösung, bei der ein einziges Messelektrodenpaar ausreichend war, ist bei dem in Fig. 5A gezeigten Durchflussmessgerät ein zweites Paar von Messelektroden 511, 512 vorgesehen, um die von den Permanentmagneten 507, 508 induzierte Messspannung $U_{E2}$ abgreifen zu können. Die beiden Messelektroden 511, 512 sind senkrecht zur Flussrichtung des Mediums und senkrecht zu der von den beiden Permanentmagneten 507, 508 festgelegten Achse 510 angeordnet. Die an den beiden Messelektroden 511, 512 abgreifbare Spannung $U_{E2}$ erlaubt eine permanente Überwachung des Durchflusses. Jeweils dann, wenn ein genauer Messwert des Durchflusses benötigt wird, wird das Spulensystem für kurze Zeit aktiviert, um das für die genaue Durchflussmessung benötigte magnetische Wechselfeld zu erzeugen.

In Fig. 5B ist ein spezielles Beispiel gezeigt, bei dem die beiden Spulen 513, 514 oberhalb und unterhalb eines Messrohrs 515 angeordnet sind und bei dem die beiden Permanentmagnete 516, 517 senkrecht zu der von den beiden Spulen 513, 514 festgelegten Richtung angeordnet sind. Wenn die beiden Spulen 513, 514 mit einem getakteten Gleichstrom beaufschlagt werden, erzeugen sie ein magnetisches Wechselfeld. Die durch das magnetische Wechselfeld induzierte Spannung $U_{E1}$ kann an den beiden senkrecht zu den Spulen 513, 514 angeordneten Messelektroden 518, 519 abgegriffen werden. Die beiden Messelektroden 518, 519 können sich beispielsweise durch Bohrungen in den Permanentmagneten 516, 517 hindurch ins Innere des Messrohrs 515 erstrecken. Die Auswertung der durch das magnetische Wechselfeld induzierten Messspannung $U_{E1}$ ermöglicht eine genaue Bestimmung des aktuellen Durchflusswerts.

Die beiden Permanentmagnete 516, 517 sind in Fig. 5B senkrecht zu den beiden Spulen 513, 514 angeordnet und erzeugen über den Querschnitt des Messrohrs 515 hinweg ein permanentes Magnetfeld. Durch dieses permanente Magnetfeld wird senkrecht zu den beiden Permanentmagneten 516, 517 eine Messspannung $U_{E2}$ induziert, die von den beiden Messelektroden 520, 521 abgegriffen werden kann. Diese beiden Messelektroden 520, 521 erstrecken sich durch die Spulen 513, 514 hindurch ins Innere des Messrohrs 515. Anhand der Messspannung $U_{E2}$ kann der Durchfluss im Messrohr 515 permanent überwacht werden, wobei jeweils bei Bedarf das magnetische Wechselfeld eingeschaltet und eine genaue Durchflussmessung unter Verwendung des magnetischen Wechselfelds veranlasst wird.

In Fig. 6 ist eine weitere geometrische Anordnung von Spulen und Permanentmagneten in einem magnetisch-induktiven Durchflussmessgerät gezeigt. Das Spulensystem des Durchflussmessgeräts umfasst eine erste Spule 600, die oberhalb des Messrohrs 601 angeordnet ist, sowie eine zweite Spule 602, die unterhalb des Messrohrs 601 angeordnet ist. Die beiden Spulen 600, 602 sind dazu ausgelegt, über den Querschnitt des Messrohrs 601 hinweg ein magnetisches Wechselfeld zu erzeugen. Senkrecht zu der durch die beiden Spulen 600, 602 festgelegten Achse 603 ist ein Paar von Messelektroden 604, 605 angeordnet, die dazu ausgelegt sind, die vom magnetischen Wechselfeld induzierte Messspannung $U_{E1}$ abzugreifen. Die Auswertung dieser durch das magnetische Wechselfeld hervorgerufenen Messspannung $U_{E1}$ erlaubt eine genaue Bestimmung des Durchflusses durch das Messrohr 601.

Bei den bisher in Fig. 1, Fig. 5A, Fig. 5B gezeigten Lösungen waren Spulen und Permanentmagnete jeweils in derselben Querschnittsebene des Messrohrs angeordnet. Dagegen sind in Fig. 6 die Spulen 600, 602 und die Messelektroden 604, 605 in einer ersten Querschnittsebene 608 angeordnet, während die Permanentmagnete 606, 607 in einer davon beabstandeten zweiten Querschnittsebene 609 angeordnet sind. Zum Abgreifen der von den Permanentmagneten 606, 607 induzierten Spannung $U_{E2}$ ist in der zweiten Querschnittsebene 609 ein zweites Paar von Messelektroden 612, 613 vorgesehen, das senkrecht zu der durch die Permanentmagnete 606, 607 festgelegten Achse 611 angeordnet ist.

Die zweite Querschnittsebene 609 ist in einem gewissen Abstand 610 zur ersten Querschnittsebene 608 angeordnet. Die durch die beiden Permanentmagnete 606, 607 festgelegte Achse 611 kann relativ zur Achse 603 in einem beliebigen Winkel $\alpha$ ausgerichtet sein. Die an den beiden Messelektroden 612, 613 abgreifbare Spannung $U_{E2}$ ermöglicht eine ständige Überwachung des Durchflusses durch das Messrohr 601. Nur bei signifikanten Änderungen des Durchflusses bzw. zusätzlich auch in regelmäßigen Zeitabständen wird eine genaue Messung des Durchflusses unter Verwendung des magnetischen Wechselfeldes veranlasst.

**Patentansprüche**

1. Magnetisch-induktives Durchflussmessgerät zur Messung des Durchflusses eines fließfähigen Mediums, wobei das Durchflussmessgerät aufweist

   - ein Messrohr (100, 500, 515, 601),
   - ein Paar von Spulen (101, 103, 501, 502, 513, 514, 600, 602), die einander gegenüberliegend am Messrohr angeordnet sind und dazu ausgelegt sind, ein ein- und ausschaltbares magnetisches Wechselfeld zu erzeugen, das im Wesentlichen quer zur Längsachse des Messrohrs orientiert ist,
   - ein Paar von Permanentmagneten (109, 110, 114, 115, 507, 508, 516, 517, 606, 607), die einander gegenüberliegend am Messrohr angeordnet sind und dazu ausgelegt sind, ein permanentes Magnetfeld zu erzeugen, das im Wesentlichen quer zur Längsachse des Messrohrs orientiert ist,
   - ein oder mehrere Paare von einander am Messrohr gegenüberliegend angeordneten Messelektroden, von denen ein Paar von Messelektroden (107, 108, 511, 512, 520, 521, 612, 613) dazu ausgelegt ist, bei ausgeschaltetem magnetischen Wechselfeld eine durch das permanente Magnetfeld induzierte Messspannung abzugreifen, und
   - eine Auswerteeinheit, die dazu ausgelegt ist, bei ausgeschaltetem magnetischen Wechselfeld die durch das permanente Magnetfeld induzierte Messspannung zu überwachen, bei Detektion einer vordefinierten Änderung der Messspannung das magnetische Wechselfeld einzuschalten und bei eingeschaltetem magnetischen Wechselfeld einen Messwert für den Durchfluss zu bestimmen.

2. Durchflussmessgerät nach Anspruch 1, **dadurch gekennzeichnet, dass** die Auswerteeinheit dazu ausgelegt ist, nach Einschalten des Wechselfelds eine durch das magnetische Wechselfeld oder durch das magnetische Wechselfeld und das permanente Magnetfeld induzierte Messspannung zu erfassen und basierend auf einer Auswertung der von dem magnetischen Wechselfeld oder dem magnetischen Wechselfeld und dem permanenten Magnetfeld induzierten Messspannung einen Messwert für den Durchfluss zu bestimmen.

3. Durchflussmessgerät nach Anspruch 1 oder Anspruch 2, **dadurch gekennzeichnet, dass** das von den Spulen erzeugbare magnetische Wechselfeld im Wesentlichen parallel orientiert ist zu dem von den Permanentmagneten erzeugten permanenten Magnetfeld.

4. Durchflussmessgerät nach Anspruch 3, **dadurch gekennzeichnet, dass** die am Messrohr gegenüberliegend angeordneten Messelektroden im Wesentlichen senkrecht zu dem magnetischen Wechselfeld und dem permanenten Magnetfeld angeordnet sind, wobei das Paar von Messelektroden dazu ausgelegt ist, bei ausgeschaltetem magnetischen Wechselfeld eine durch das permanente Magnetfeld induzierte Messspannung abzugreifen und bei eingeschaltetem magnetischen Wechselfeld eine durch das magnetische Wechselfeld oder durch das magnetische Wechselfeld und das permanente Magnetfeld induzierte Messspannung abzugreifen.

5. Durchflussmessgerät nach Anspruch 3 oder Anspruch 4, **gekennzeichnet durch** mindestens eines von folgenden:

   - die beiden Permanentmagnete sind jeweils innerhalb der beiden Spulen angeordnet;
   - die Permanentmagnete sind anstelle eines Spulenkerns jeweils innerhalb der beiden Spulen angeordnet;
   - die beiden Permanentmagnete sind koaxial mittig zu den beiden Spulen angeordnet;
   - für die Spulen und die Permanentmagnete ist ein gemeinsames Paar von Polschuhen vorgesehen;
   - für die Spulen und die Permanentmagnete ist ein gemeinsames Magnetsystem vorgesehen, wobei das Magnetsystem mindestens eines von Polschuhen, Polblechen und Rückführblechen umfasst.

6. Durchflussmessgerät nach Anspruch 3 oder Anspruch 4, **gekennzeichnet durch** mindestens eines von folgenden:

   - jeweils innerhalb der beiden Spulen sind Spulenkerne angeordnet, und die Permanentmagnete sind zusätzlich zu den Spulenkernen angebracht;
   - jeweils innerhalb der beiden Spulen sind Spulenkerne angeordnet, und die Permanentmagnete sind jeweils zusätzlich zu den Spulenkernen oberhalb oder unterhalb des jeweiligen Spulenkerns angebracht;
   - jeweils innerhalb der beiden Spulen sind Spulenkerne angeordnet, und die Permanentmagnete schließen sich jeweils oberhalb oder unterhalb an die Spulenkerne an;

- jeweils innerhalb der beiden Spulen sind Spulenkerne angeordnet, und die Permanentmagnete sind zusätzlich zu den Spulenkernen angebracht und ersetzen die Spulenkerne jeweils zumindest zum Teil;
- für die Spulen und die Permanentmagnete ist ein gemeinsames Paar von Polschuhen vorgesehen;
- für die Spulen und die Permanentmagnete ist ein gemeinsames Magnetsystem vorgesehen, wobei das Magnetsystem mindestens eines von Polschuhen, Polblechen und Rückführblechen umfasst.

7. Durchflussmessgerät nach Anspruch 1 oder Anspruch 2, **dadurch gekennzeichnet, dass** das von den Spulen erzeugbare magnetische Wechselfeld um einen vorgegebenen Winkel verdreht zu dem von den Permanentmagneten erzeugten permanenten Magnetfeld orientiert ist.

8. Durchflussmessgerät nach Anspruch 7, **dadurch gekennzeichnet, dass** das Durchflussmessgerät ein erstes Paar von einander am Messrohr gegenüberliegend angeordneten Messelektroden umfasst, die im Wesentlichen senkrecht zu dem permanenten Magnetfeld angeordnet sind, wobei das erste Paar von Messelektroden dazu ausgelegt ist, bei ausgeschaltetem magnetischen Wechselfeld eine durch das permanente Magnetfeld induzierte Messspannung abzugreifen.

9. Durchflussmessgerät nach Anspruch 7 oder Anspruch 8, **dadurch gekennzeichnet, dass** das Durchflussmessgerät zusätzlich ein zweites Paar von einander am Messrohr gegenüberliegend angeordneten Messelektroden umfasst, die im Wesentlichen senkrecht zu dem magnetischen Wechselfeld angeordnet sind, wobei das zweite Paar von Messelektroden dazu ausgelegt ist, bei eingeschaltetem magnetischen Wechselfeld eine durch das magnetische Wechselfeld oder durch das magnetische Wechselfeld und das permanente Magnetfeld induzierte Messspannung abzugreifen.

10. Durchflussmessgerät nach einem der Ansprüche 7 bis 9, **dadurch gekennzeichnet, dass** das von den Spulen erzeugbare magnetische Wechselfeld im Wesentlichen orthogonal ist zu dem von den Permanentmagneten erzeugten permanenten Magnetfeld.

11. Durchflussmessgerät nach Anspruch 1 oder Anspruch 2, **dadurch gekennzeichnet, dass**

- das Paar von Permanentmagneten und ein erstes Paar von Messelektroden in einer ersten Querschnittsebene zum Messrohr angeordnet sind, wobei das erste Paar von Messelektroden im Wesentlichen senkrecht zu dem von den Permanentmagneten erzeugten permanenten Magnetfeld angeordnet ist, und
- das Paar von Spulen und ein zweites Paar von Messelektroden in einer zweiten Querschnittsebene zum Messrohr angeordnet sind, die entlang des Messrohrs um einen Abstand versetzt zur ersten Querschnittsebene angeordnet ist, wobei das zweite Paar von Messelektroden im Wesentlichen senkrecht zu dem von den Spulen erzeugbaren magnetischen Wechselfeld angeordnet ist.

12. Durchflussmessgerät nach einem der Ansprüche 1 bis 11, **dadurch gekennzeichnet, dass** die Auswerteeinheit dazu ausgelegt ist, zur Detektion von vordefinierten Änderungen der Messspannung die zeitliche Änderung der Messspannung jeweils mit einem Grenzwert zu vergleichen, bei Überschreiten des Grenzwerts das magnetische Wechselfeld einzuschalten und eine Messung des Durchflusses unter Verwendung des magnetischen Wechselfelds zu veranlassen.

13. Durchflussmessgerät nach Anspruch 12, **gekennzeichnet durch** mindestens von folgenden:

- der Grenzwert für die vordefinierte Änderung der Messspannung ist dynamisch anpassbar;
- die Auswerteeinheit umfasst einen Differenzierer, der dazu ausgelegt ist, eine Ableitung der Messspannung zu bilden, sowie einen Komparator, der die Ableitung der Messspannung mit einem Grenzwert vergleicht.

14. Durchflussmessgerät nach einem der Ansprüche 1 bis 13, **dadurch gekennzeichnet, dass** die Auswerteeinheit dazu ausgelegt ist, zusätzlich zu den bei vordefinierten Änderungen des Durchflusses durchgeführten Messungen des Durchflusswerts in regelmäßigen Zeitabständen das magnetische Wechselfeld einzuschalten und eine Messung des Durchflusses unter Verwendung des magnetischen Wechselfelds durchzuführen.

15. Durchflussmessgerät nach einem der Ansprüche 1 bis 14, **dadurch gekennzeichnet, dass** der induzierten Messspannung ein Messspannungsoffset überlagert ist, wobei der Messspannungsoffset durch mindestens eines von folgenden hervorgerufen wird:

- elektrochemische Effekte in der Flüssigkeit,
- das von den Permanentmagneten erzeugte permanente Magnetfeld.

16. Durchflussmessgerät nach einem der Ansprüche 1 bis 15, **dadurch gekennzeichnet, dass** die Auswerteeinheit dazu ausgelegt ist, durch periodische Richtungswechsel des magnetischen Wechselfelds einen die Messspannung überlagernden Messspannungsoffset zu eliminieren und einen vom Messspannungsoffset unabhängigen Messwert des Durchflusses zu bestimmen.

17. Verfahren zur Bestimmung eines Durchflusses in einem Messrohr (100, 500, 515, 601) mittels eines magnetisch-induktiven Durchflussmessgeräts, welches aufweist:

- das Messrohr (100, 500, 515, 601),
- ein Paar von Spulen (101, 103, 501, 502, 513, 514, 600, 602), die einander gegenüberliegend am Messrohr angeordnet sind und dazu ausgelegt sind, ein ein- und ausschaltbares magnetisches Wechselfeld zu erzeugen, das im Wesentlichen quer zur Längsachse des Messrohrs orientiert ist,
- ein Paar von Permanentmagneten (109, 110, 114, 115, 507, 508, 516, 517, 606, 607), die einander gegenüberliegend am Messrohr angeordnet sind und dazu ausgelegt sind, ein permanentes Magnetfeld zu erzeugen, das im Wesentlichen quer zur Längsachse des Messrohrs orientiert ist,
- ein oder mehrere Paare von einander am Messrohr gegenüberliegend angeordneten Messelektroden, von denen ein Paar von Messelektroden (107, 108, 511, 512, 520, 521, 612, 613) dazu ausgelegt ist, bei ausgeschaltetem magnetischen Wechselfeld eine durch das permanente Magnetfeld induzierte Messspannung abzugreifen,

wobei das Verfahren folgende Schritte aufweist:

- Überwachen einer bei ausgeschaltetem magnetischem Wechselfeld durch das permanente Magnetfeld induzierten Messspannung,
- Detektieren einer vordefinierten Änderung der durch das permanente Magnetfeld induzierten Messspannung,
- im Fall der Detektion einer vordefinierten Änderung der Messspannung, Einschalten des magnetischen Wechselfelds und Durchführen einer Durchflussmessung bei eingeschaltetem magnetischen Wechselfeld.

18. Verfahren nach Anspruch 17, **dadurch gekennzeichnet, dass** nach Einschalten des magnetischen Wechselfelds eine durch das magnetische Wechselfeld oder durch das magnetische Wechselfeld und das permanente Magnetfeld induzierte Messspannung erfasst wird und basierend auf der so ermittelten Messspannung ein Messwert für den Durchfluss bestimmt wird.

**Claims**

1. Electromagnetic flowmeter designed to measure the flow of a flowable medium, wherein the flowmeter comprises:

- a measuring tube (100, 500, 515, 601),
- a pair of coils (101, 103, 501, 502, 513, 514, 600, 602), which are arranged opposite one another on the measuring tube and are designed to generate an alternating magnetic field which can be activated and deactivated, said field being oriented essentially perpendicular to the longitudinal axis of the measuring tube,
- a pair of permanent magnets (109, 110, 114, 115, 507, 508, 516, 517, 606, 607), which are arranged opposite one another on the measuring tube and are designed to generate a permanent magnetic field, said field being oriented essentially perpendicular to the longitudinal axis of the measuring tube,
- one or more pairs of measuring electrodes arranged opposite one another on the measuring tube, one pair of said measuring electrodes (107, 108, 511, 512, 520, 521, 612, 613) being designed to capture a measuring voltage induced by the permanent magnetic field when the alternating magnetic field is deactivated, and
- an evaluation unit which is designed to monitor the measuring voltage induced by the permanent magnetic field when the alternating magnetic field is deactivated, and to activate the alternating magnetic field if a predefined change in the measuring voltage is detected, and to determine a measured value for the flow when the alternating magnetic field is activated.

2. Flowmeter as claimed in Claim 1, **characterized in that** - following the activation of the alternating field - the evaluation unit is designed to capture a measuring voltage induced by the alternating magnetic field, or by the alternating magnetic field and the permanent magnetic field and to determine a measured value for the flow based on an evaluation of the measuring voltage induced by the alternating magnetic field, or by the alternating magnetic field and the permanent magnetic field.

3. Flowmeter as claimed in Claim 1 or 2, **characterized in that** the alternating magnetic field that can be generated by the coils is essentially oriented parallel to the permanent magnetic field generated by the permanent magnets.

4. Flowmeter as claimed in Claim 3, **characterized in that** the measuring electrodes arranged opposite one another on the measuring tube are arranged essentially perpendicular to the alternating magnetic field and to the permanent magnetic field, wherein the pair of measuring electrodes is designed to capture a measuring voltage induced by the permanent magnetic field when the alternating magnetic field is deactivated, and, when the alternating magnetic field is activated, to capture a measuring voltage induced by the alternating magnetic field or by the alternating magnetic field and the permanent magnetic field.

5. Flowmeter as claimed in Claim 3 or 4, **characterized by** at least one of the following:

> - the two permanent magnets are each arranged inside the two coils;
> - the permanent magnets are each arranged inside the two coils instead of a coil core;
> - the two permanent magnets are arranged in a coaxially central manner in relation to the two coils;
> - a common pair of pole pieces is provided for the coils and the permanent magnets;
> - a common magnet system is provided for the coils and the permanent magnets, wherein the magnet system comprises at least one the following elements: pole pieces, pole sheets, and return sheets.

6. Flowmeter as claimed in Claim 3 or 4, **characterized by** at least one of the following:

> - coil cores are arranged within each of the two coils, and the permanent magnets are fitted in addition to the coil cores;
> - coil cores are arranged within each of the two coils, and, in addition to the coil cores, the permanent magnets are fitted above or below the coil core in question;
> - coil cores are arranged within each of the two coils and the permanent magnets follow on from the coil cores, above or below;
> - coil cores are arranged within each of the two coils, and the permanent magnets are fitted in addition to the coil cores and replace the coil cores at least in part;
> - a common pair of pole pieces is provided for the coils and the permanent magnets;
> - a common magnet system is provided for the coils and the permanent magnets, wherein the magnet system comprises at least one the following elements: pole pieces, pole sheets, and return sheets.

7. Flowmeter as claimed in Claim 1 or 2, **characterized in that** the alternating magnetic field which can be generated by the coils is offset by a predefined angle in relation to the permanent magnetic field generated by the permanent magnets.

8. Flowmeter as claimed in Claim 7, **characterized in that** the flowmeter comprises a first pair of measuring electrodes arranged opposite one another on the measuring tube, said electrodes being arranged so that they are essentially perpendicular to the permanent magnetic field, wherein the first pair of measuring electrodes is designed to capture a measuring voltage induced by the permanent magnetic field when the alternating magnetic field is deactivated.

9. Flowmeter as claimed in Claim 7 or 8, **characterized in that** the flowmeter additionally comprises a second pair of measuring electrodes arranged opposite one another on the measuring tube, said electrodes being arranged so that they are essentially perpendicular to the alternating magnetic field, wherein the second pair of measuring electrodes is designed to capture a measuring voltage induced by the alternating magnetic field, or by the alternating magnetic field and the permanent magnetic field when the alternating magnetic field is activated.

10. Flowmeter as claimed in one of the Claims 7 to 9, **characterized in that** the alternating magnetic field which can be generated by the coils is essentially orthogonal in relation to the permanent magnetic field generated by the permanent magnets.

11. Flowmeter as claimed in Claim 1 or Claim 2, **characterized in that**

> - the pair of permanent magnets and a first pair of measuring electrodes are arranged in a first cross-section plane in relation to the measuring tube, the first pair of measuring electrodes being arranged in a manner that is essentially perpendicular to the permanent magnetic field generated by the permanent magnets, and
> - the pair of coils and a second pair of measuring electrodes are arranged in a second cross-section plane in relation to the measuring tube, said plane being arranged along the measuring tube, offset by a distance in relation to the first cross-section plane, the second pair of measuring electrodes being arranged in a manner that is essentially perpendicular to the alternating magnetic field which can be generated by the coils.

12. Flowmeter as claimed in one of the Claims 1 to 11, **characterized in that** the evaluation unit is designed to detect predefined changes in the measuring voltage, to compare the change in the measuring voltage over time with a limit value, to activate the alternating magnetic field if the limit value is exceeded and to initiate a measurement of the flow using the alternating magnetic field.

13. Flowmeter as claimed in Claim 12, **characterized**

by at least one of the following:

- the limit value for the predefined change in the measuring voltage can be adapted dynamically;
- the evaluation unit comprises a differentiator, which is designed to form a derivative of the measuring voltage, and a comparator, which compares the derivative of the measuring voltage with a limit value.

14. Flowmeter as claimed in one of the Claims 1 to 13, **characterized in that** the evaluation unit is designed to activate the alternating magnetic field at regular intervals and to take a measurement of the flow using the alternating magnetic field, in addition to the measurements of the flow value which are performed in the event of predefined changes in the flow.

15. Flowmeter as claimed in one of the Claims 1 to 14, **characterized in that** a measuring voltage offset is superimposed on the induced measuring voltage, wherein the measuring voltage offset is caused by at least one of the following:

- electrochemical effects in the liquid,
- the permanent magnetic field generated by the permanent magnets.

16. Flowmeter as claimed in one of the Claims 1 to 15, **characterized in that** the evaluation unit is designed to eliminate a measuring voltage offset that is superimposed on the measuring voltage by periodically changing the direction of the alternating magnetic field, and to determine a flow measured value that is independent of the measuring voltage offset.

17. Procedure designed to determine a flow in a measuring tube (100, 500, 515, 601) using an electromagnetic flowmeter, which comprises

- the measuring tube (100, 500, 515, 601),
- a pair of coils (101, 103, 501, 502, 513, 514, 600, 602), which are arranged opposite one another on the measuring tube and are designed to generate an alternating magnetic field which can be activated and deactivated, said field being oriented essentially perpendicular to the longitudinal axis of the measuring tube,
- a pair of permanent magnets (109, 110, 114, 115, 507, 508, 516, 517, 606, 607), which are arranged opposite one another on the measuring tube and are designed to generate a permanent magnetic field, said field being oriented essentially perpendicular to the longitudinal axis of the measuring tube,
- one or more pairs of measuring electrodes arranged opposite one another on the measuring tube, one pair of said measuring electrodes (107, 108, 511, 512, 520, 521, 612, 613) being designed to capture a measuring voltage induced by the permanent magnetic field when the alternating magnetic field is deactivated,

wherein said procedure comprises the following steps:

- monitoring of a measuring voltage induced by the permanent magnetic field when the alternating magnetic field is deactivated,
- detection of a predefined change in the measuring voltage induced by the permanent magnetic field,
- in the event that a predefined change in the measuring voltage is detected, activation of the alternating magnetic field and performance of a flow measurement when the alternating magnetic field is activated.

18. Procedure as claimed in Claim 17, **characterized in that** a measuring voltage, which is induced by the alternating magnetic field, or by the alternating magnetic field and the permanent magnetic field, is measured after the activation of the alternating magnetic field, and **in that** a measured value for the flow is determined based on the measuring voltage determined in this way.

## Revendications

1. Débitmètre magnéto-inductif destiné à la mesure du débit d'un produit apte à s'écouler, le débitmètre comprenant :

- un tube de mesure (100, 500, 515, 601),
- une paire de bobines (101, 103, 501, 502, 513, 514, 600, 602), qui sont disposées en vis-à-vis sur le tube de mesure et sont conçues de telle sorte à générer un champ magnétique alternatif activable et désactivable, lequel champ est orienté pour l'essentiel perpendiculairement à l'axe longitudinal du tube de mesure,
- une paire d'aimants permanents (109, 110, 114, 115, 507, 508, 516, 517, 606, 607), qui sont disposés en vis-à-vis sur le tube de mesure et sont conçus de telle sorte à générer un champ magnétique permanent, lequel champ est orienté pour l'essentiel perpendiculairement à l'axe longitudinal du tube de mesure,
- une ou plusieurs paires d'électrodes de mesure disposées en vis-à-vis sur le tube de mesure, parmi lesquelles une paire d'électrodes de mesure (107, 108, 511, 512, 520, 521, 612, 613) est conçue de telle sorte, lorsque le champ magnétique alternatif est désactivé, à prélever une tension de mesure induite par le champ magnétique permanent, et

- une unité d'exploitation, qui est conçue de manière à surveiller, lorsque le champ magnétique alternatif est désactivé, la tension de mesure induite par le champ magnétique permanent et, en cas de détection d'un changement prédéfini de la tension de mesure, à activer le champ magnétique alternatif et, lorsque le champ magnétique alternatif est activé, à déterminer une valeur mesurée pour le débit.

2. Débitmètre selon la revendication 1, **caractérisé en ce que** l'unité d'exploitation est conçue de telle sorte, après l'activation du champ alternatif, à mesurer une tension de mesure induite par le champ magnétique alternatif, ou par le champ magnétique alternatif et le champ magnétique permanent et, en se basant sur une exploitation de la tension de mesure induite par le champ magnétique alternatif, ou par le champ magnétique alternatif et le champ magnétique permanent, à déterminer une valeur mesurée pour le débit.

3. Débitmètre selon la revendication 1 ou 2, **caractérisé en ce que** le champ magnétique alternatif pouvant être généré par les bobines est orienté pour l'essentiel parallèlement au champ magnétique permanent généré par les aimants permanents.

4. Débitmètre selon la revendication 3, **caractérisé en ce que** les électrodes de mesure disposées en vis-à-vis sur le tube de mesure sont pour l'essentiel disposées perpendiculairement au champ magnétique alternatif et au champ magnétique permanent, la paire d'électrodes de mesure étant conçue de telle sorte, lorsque le champ magnétique alternatif est désactivé, à prélever une tension de mesure induite par le champ magnétique permanent et, lorsque le champ magnétique alternatif est activé, à prélever une tension de mesure induite par le champ magnétique alternatif, ou par le champ magnétique alternatif et le champ magnétique permanent.

5. Débitmètre selon la revendication 3 ou 4, **caractérisé par** au moins l'une des caractéristiques suivantes :

   - les deux aimants permanents sont chacun disposés à l'intérieur des deux bobines ;
   - les aimants permanents sont disposés en lieu et place d'un noyau de bobine à l'intérieur des deux bobines ;
   - les deux aimants permanents sont disposés de façon coaxiale au centre de deux bobines ;
   - une paire de pièces polaires commune est prévue pour les bobines et les aimants permanents ;
   - un système magnétique commun est prévu pour les bobines et les aimants permanents, le système magnétique comprenant au minimum l'un parmi les éléments suivants : des pièces polaires, des tôles polaires et/ou des tôles de retour.

6. Débitmètre selon la revendication 3 ou 4, **caractérisé par** au moins l'une des caractéristiques suivantes :

   - des noyaux de bobine sont disposés respectivement à l'intérieur des deux bobines, et les aimants permanents sont fixés en plus sur les noyaux de bobine ;
   - des noyaux de bobine sont disposés respectivement à l'intérieur des deux bobines, et les aimants permanents sont fixés en plus sur les noyaux de bobine, en haut ou en bas de chaque noyau de bobine ;
   - des noyaux de bobine sont disposés respectivement à l'intérieur des deux bobines, et les aimants permanents sont disposés respectivement, en haut ou en bas, dans le prolongement des noyaux de bobine ;
   - des noyaux de bobine sont disposés respectivement à l'intérieur des deux bobines, et les aimants permanents sont fixés en plus sur les noyaux de bobine et remplacent, au moins partiellement, les noyaux de bobine ;
   - une paire commune de pièces polaires est prévue pour les bobines et les aimants permanents ;
   - un système magnétique commun est prévu pour les bobines et les aimants permanents, le système magnétique comprenant au minimum l'un parmi les éléments suivants : des pièces polaires, des tôles polaires et/ou des tôles de retour.

7. Débitmètre selon la revendication 1 ou 2, **caractérisé en ce que** le champ magnétique alternatif pouvant être généré par les bobines est orienté de façon décalée, selon un angle prédéfini, par rapport au champ magnétique permanent généré par les aimants permanents.

8. Débitmètre selon la revendication 7, **caractérisé en ce que** le débitmètre comprend une première paire d'électrodes de mesure disposées en vis-à-vis sur le tube de mesure, lesquelles électrodes sont disposées pour l'essentiel perpendiculairement au champ magnétique permanent, la première paire d'électrodes de mesure étant conçue de telle sorte, lorsque le champ magnétique alternatif est désactivé, à prélever une tension de mesure induite par le champ magnétique permanent.

9. Débitmètre selon la revendication 7 ou 8, **caracté-**

**risé en ce que** le débitmètre comprend en outre une deuxième paire d'électrodes de mesure disposées en vis-à-vis sur le tube de mesure, lesquelles électrodes sont disposées pour l'essentiel perpendiculairement au champ magnétique alternatif, la deuxième paire d'électrodes de mesure étant conçue de telle sorte, lorsque le champ magnétique alternatif est désactivé, à prélever une tension de mesure induite par le champ magnétique alternatif, ou par le champ magnétique alternatif et le champ magnétique permanent.

10. Débitmètre selon l'une des revendications 7 à 9, **caractérisé en ce que** le champ magnétique alternatif pouvant être généré par les bobines est pour l'essentiel orthogonal par rapport au champ magnétique permanent généré par les aimants permanents.

11. Débitmètre selon la revendication 1 ou la revendication 2, **caractérisé en ce que**

    - la paire d'aimants permanents et une première paire d'électrodes de mesure sont disposées dans un premier plan de coupe transversale par rapport au tube de mesure, la première paire d'électrodes de mesure étant pour l'essentiel disposée de façon perpendiculaire au champ magnétique permanent généré par les aimants permanents, et
    - la paire de bobines et une deuxième paire d'électrodes de mesure sont disposées dans un deuxième plan de coupe transversale par rapport au tube de mesure, lequel plan est disposé le long du tube de mesure, décalé d'une distance par rapport au premier plan de coupe transversale, la deuxième paire d'électrodes de mesure étant disposée pour l'essentiel de façon perpendiculaire au champ magnétique alternatif pouvant être généré par les bobines.

12. Débitmètre selon l'une des revendications 1 à 11, **caractérisé en ce que** l'unité d'exploitation est conçue de telle sorte, en vue de la détection de changements prédéfinis de la tension de mesure, à comparer le changement dans le temps de la tension de mesure à chaque fois avec une valeur seuil et, en cas de dépassement de la valeur seuil, à activer le champ magnétique alternatif et à déclencher une mesure du débit en utilisant le champ magnétique alternatif.

13. Débitmètre selon la revendication 12, **caractérisé par** au moins l'un des éléments suivants :

    - la valeur seuil pour le changement prédéfini de la tension de mesure peut être adaptée de façon dynamique ;
    - l'unité d'exploitation comprend un différenciateur, lequel est conçu de sorte à former une dérivation de la tension de mesure, ainsi qu'un comparateur, qui compare la dérivation de la tension de mesure avec une valeur seuil.

14. Débitmètre selon l'une des revendications 1 à 13, **caractérisé en ce que** l'unité d'exploitation est conçue de sorte, en plus des mesures de débit, effectuées lors de changements prédéfinis du débit, à activer à intervalles de temps réguliers le champ magnétique alternatif et à effectuer une mesure du débit en utilisant le champ magnétique alternatif.

15. Débitmètre selon l'une des revendications 1 à 14, **caractérisé en ce qu'**un décalage de tension de mesure est superposé à la tension de mesure induite, le décalage de tension de mesure étant généré par au moins l'un des éléments suivants :

    - effets électrochimiques dans le liquide,
    - le champ magnétique permanent généré par les aimants permanents.

16. Débitmètre selon l'une des revendications 1 à 15, **caractérisé en ce que** l'unité d'exploitation est conçue de telle sorte, par un changement périodique de direction du champ magnétique alternatif, à éliminer un décalage de tension de mesure superposé à la tension de mesure et à déterminer une valeur mesurée de débit indépendante du décalage de tension de mesure.

17. Procédé destiné à la détermination d'un débit dans un tube de mesure (100, 500, 515, 601) au moyen d'un débitmètre magnéto-inductif, lequel comprend

    - le tube de mesure (100, 500, 515, 601),
    - une paire de bobines (101, 103, 501, 502, 513, 514, 600, 602), qui sont disposées en vis-à-vis sur le tube de mesure et sont conçues de telle sorte à générer un champ magnétique alternatif activable et désactivable, lequel champ est orienté pour l'essentiel perpendiculairement à l'axe longitudinal du tube de mesure,
    - une paire d'aimants permanents (109, 110, 114, 115, 507, 508, 516, 517, 606, 607), qui sont disposés en vis-à-vis sur le tube de mesure et sont conçus de telle sorte à générer un champ magnétique permanent, lequel champ est orienté pour l'essentiel perpendiculairement à l'axe longitudinal du tube de mesure,
    - une ou plusieurs paires d'électrodes de mesure disposées en vis-à-vis sur le tube de mesure, parmi lesquelles une paire d'électrodes de mesure (107, 108, 511, 512, 520, 521, 612, 613) est conçue de telle sorte, lorsque le champ magnétique alternatif est désactivé, à prélever une tension de mesure induite par le champ magnétique permanent,

lequel procédé comprend les étapes suivantes :

- Surveillance d'une tension de mesure induite par le champ magnétique permanent, lorsque le champ magnétique alternatif est désactivé,
- Détection d'un changement prédéfini de la tension de mesure induite par le champ magnétique permanent,
- En cas de détection d'un changement prédéfini de la tension de mesure, activation du champ magnétique alternatif et réalisation d'une mesure de débit lorsque le champ magnétique alternatif est activé.

18. Procédé selon la revendication 17, **caractérisé en ce, qu'**après l'activation du champ magnétique alternatif, une tension de mesure induite par le champ magnétique alternatif, ou par le champ magnétique alternatif et le champ magnétique permanent, est mesurée et **en ce qu'**une valeur mesurée pour le débit est déterminée sur la base de la tension de mesure ainsi déterminée.

Fig. 1A

EP 3 268 698 B1

Fig.1B

Fig.1C

EP 3 268 698 B1

$U_E$

202

201    203    204

200

Fig.2A

$U_E$

$\Delta T$    208

205

$\Delta T$    207

206    212

209    210    213    211

Fig.2B

S1 →
S2 →

| 300 |

301 →

| 302 |

303 →

| 304 |

305 →

| 306 |

309 →

307 →

| 310 |

| 308 | ← 311

**Fig. 3A**

S1 →
S2 →

| 312 |

313 →

A / D

314

| 315 |

**Fig. 3B**

I

400

t

Fig. 4A

$U_E$

403

402

401

404

405

t

Fig. 4B

Fig. 5A

Fig. 5B

Fig. 6

**IN DER BESCHREIBUNG AUFGEFÜHRTE DOKUMENTE**

**In der Beschreibung aufgeführte Patentdokumente**

- DE 3530055 A1